# EUROPEAN PATENT APPLICATION

(11) **EP 2 819 097 A1**
(43) Date of publication of application: **31.12.2014**
(21) Application number: 13173430.3
(22) Date of filing: 24.06.2013
(51) Int. Cl.: G06T 17/20, G06F 17/50

(54) **Decoupled parallel meshing in computer aided design**

(71) Applicant: FUJITSU LIMITED, Kawasaki-shi, Kanagawa 211-8588 (JP)
(72) Inventor: Georgescu, Serban, London, W5 3PL (GB); Chow, Peter, Gillingham, Kent ME7 3AH (GB)
(74) Representative: Fenlon, Christine Lesley

(57) **Abstract**

A method of meshing, for use in a computer-aided design (CAD) or computer-aided engineering (CAE) system, a CAD domain consisting of a single CAD solid, or one of a plurality of CAD parts in an assembly type CAD model, or one of a plurality of sections of a CAD part in an assembly type CAD model, comprises a procedure comprising: carrying out in parallel a plurality of CAD meshing processes so as to generate one or more meshes of the said CAD domain, each CAD meshing process of the said plurality being different from the other meshing processes in the said plurality; determining which of the meshes so generated satisfies one or more preset meshing criteria which are indicative of the quality of the mesh; and selecting for use in a subsequent CAD/CAE process one of the generated meshes which satisfies the said one or more preset meshing criteria. The plurality of meshing processes may comprise at least one primary meshing process which generates mesh elements of a first type and at least one additional meshing process which generates mesh elements of a second type different from the first type, and, if the primary meshing process generates a mesh which satisfies the said one or more preset meshing criteria, and the element type of that mesh is suitable for the domain being meshed, the mesh generated by the primary meshing process is selected for use in the subsequent CAD/CAE process. After meshes have been selected for each section, the meshes of those sections which share an interface with one or more other sections which have the same mesh element type may be merged at that interface, and for any meshes of sections which share an interface with one or more other sections which have a different mesh elements type, constraint conditions may be assigned to one or more selected nodes of elements on each interface between such section meshes, and those sections may be processed unmerged in a CAD/CAE solver, using the constraint conditions to treat those sections as if joined at the said selected node(s) between them.

## Description

The present invention relates to decoupled parallel meshing in computer-aided design (CAD), and in particular to methods and apparatus for use at different stages of a decoupled parallel meshing process.

Computed Aided Engineering (CAE), the use of computer software for the purpose of modelling and simulating the behaviour of products in order to improve their quality, has become nearly ubiquitous in the manufacturing industry. Areas covered by CAE include, but are not limited to, stress and thermal analysis, fluid dynamics and kinematics.

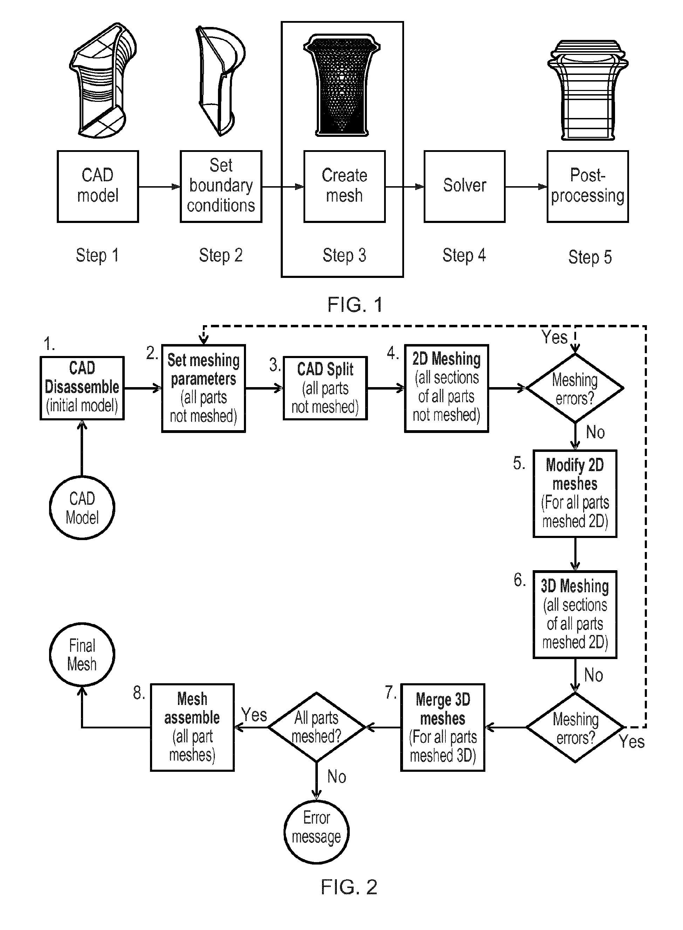

As shown in Figure 1 of the accompanying drawings, a typical CAE process starts with a Computer Aided Design (CAD) file which represents the geometrical model of the object that is analyzed (step 1). The CAD file, created using specialized CAD software, passes first through a stage at which boundary conditions are set (step 2) and then through a pre-processing step (step 3) where the geometry is partitioned (*meshed*) by a mesher into a very large number of *elements,* which form what is called a *mesh.* The mesh, accompanied by the boundary conditions, is then sent to a *solver* which uses standard numerical techniques, like the Finite Element Method, to compute the effect (e.g. deformation) of the boundary conditions on the object (step 4). Finally, the results are visualized in a post-processing step (step 5). Although the solver step used to be the most time consuming step of the analysis, with the improvement in processing power that has happened in the last few decades, the balance has shifted in the direction of the pre-processing operations, like CAD model preparation, the setting of boundary conditions and meshing. One of the main reasons for this shift is that, for complex CAD models, like the ones found in industry, a certain amount of user intervention is still required. As the processor performance is expected to follow this trend at least in the near future, pre-processing is set to become a bigger and bigger bottleneck in the analysis. Additionally, much less effort has hitherto been spent in automating and parallelizing these tasks than it was in the case of solvers. However, accelerating the pre-processing stage of the CAE process would be an important step towards achieving a faster and more efficient product development cycle and the development of better quality products.

Currently available meshers can be divided into two categories, *serial* and *parallel.* Serial meshers are restricted to the computational power of only one processor and to the memory attached to it. With a mesh of the order of 1 million elements requiring in the order of 1 GB of memory to create, it is clear that memory is a severe limitation for such codes. Moreover, with all modern processors having multiple cores, serial meshers are able to use less and less of the peak performance of the processor. However, most meshing software available today and, in particular, all those that are freely available (e.g. Netgen™, TetGen™, Gmsh™), fall into the serial mesher category.

Parallel meshers are able to create much larger meshes, and in a much shorter time, by distributing the workload to a number of processors found either in one computer or, more often, in a number of computers connected by a network. By the amount of communication performed between the processors while meshing, parallel mesh generators can be further divided into three categories: *tightly coupled, loosely coupled* and *decoupled.* From these three subcategories, only decoupled meshers (which require no communication or synchronization between different processing parts) can achieve 100% reuse of the serial meshing code. This is achieved by partitioning the domain that is to be meshed into a number of disjoint sub-domains, which are then independently meshed.

An *assembly model* is a CAD model consisting of multiple solids, which may or may not be in physical contact with each other. Throughout the present application, the term *part* will have the meaning of a single solid component of an assembly model. For the sake of consistency, if the input CAD file consists of a single solid, we will refer to it as an assembly with one part. A solid may be split/partitioned into a number of *sections.* A *2D meshing* operation is the discretization of the faces of a solid by 2D elements such as triangles or quadrilaterials. A *3D meshing* operation is the discretization of the entire volume of a solid by 3D elements such as tetrahedrals or hexahedrals. A *mesh merge* operation is the combining of the 3D meshes of the individual sections of a part into one coherent 3D mesh for that part. A coherent mesh is defined as one single connected mesh, without duplicate nodes on the interfaces between sections. A *mesh assembly* operation is the putting together of the meshes for one or more individual parts into one single mesh for the assembly model. The difference between mesh assembly and mesh merging is that an assembled mesh does not become one single connected mesh. In other words, even if the meshes of two parts are in physical contact, the interface will contain two sets of nodes and elements, one set for each mesh. More formally, there is no element in the assembled mesh which has nodes belonging to the meshes of more than one part.

A decoupled parallel meshing system proposed in EP12173469.3 is illustrated in Figure 2 of the accompanying drawings. It can be regarded as being built from one or more individual processes or modules 1 to 8, depicted in Figure 2 as rectangular blocks. These modules are used in sequence, starting with the reading of the CAD file that is to be meshed and ending, in the case the meshing is successful, with a 3D mesh of the CAD file.

Module 1 is a CAD Disassemble module, module 2 is a Mesh Parameter Setting module, module 3 is a CAD Split module, module 4 is a 2D Meshing module, module 5 is a 2D Mesh Modification module, module 6 is a 3D Meshing module, module 7 is a 3D Mesh Merging module, and module 8 is a Mesh Assemble module.

The function of the 2D Meshing module 4 is to create a 2D (surface) mesh starting from CAD geometry. The module 4 can use any off-the-shelf unmodified mesher to create the 2D surface mesh of the CAD file given as input and using the specified meshing parameters. The CAD file is a section of a part, generated by the CAD split module, while the meshing parameters are computed by the Meshing Parameter Setting module 2.

The function of the 2D Mesh Modification module 5 is to modify the surface meshes for all the sections of one part such that the meshes of sections which have an interface with one another are the same at that interface. This is important when using meshers which use randomized meshing algorithms, for which there is no guarantee that the same geometry will be meshed in the same way every time. Actually, for meshers like Gmsh™ or Netgen™, which are currently two of the most widely-used pieces of open source meshing software, the 2D and 3D meshes generated for the same input CAD file are different almost every single time the program is run. EP12173469.3 recognizes that the restriction imposed on serial meshers used as bases for parallel meshing in the prior art, that they should always generate the same 2D surface mesh, may advantageously be relaxed, and proposes that the mesher only be required to generate the same 1D edge mesh. That is, EP12173469.3 proposes a method of modifying a 2D mesh at a surface of a section produced using a meshing method which generates the same 1 D edge mesh at every surface, in which, for all sections for which the method has not already been carried out and which have an interface with another section, nodes of elements along edges of a surface of a section on one side of the interface are matched with nodes of elements along edges of an opposing surface of a section on the other side of the interface; and the elements on the surface on one side of the interface are replaced with the elements on the surface on the other side of the interface.

The function of the 3D Meshing module 6 is to create a 3D (volume) mesh starting from 2D surface geometry. The module 6 can use an off-the-shelf unmodified mesher to create a 3D volume mesh from the 2D surface mesh file given as input and using the specified meshing parameters. The 2D surface mesh file is the 2D mesh of a section of a part, generated by the 2D Meshing module 4 and modified by the 2D Mesh modification module 5, while the meshing parameters are computed by the Meshing Parameter Setting module 2. The 3D Mesher must not add any new nodes on the 2D surface. One example of a meshing algorithm with this property is the Frontal method, used in meshers like Gmsh™ and Netgen™.

The function of the 3D Mesh Merging module 7 is to combine the 3D meshes corresponding to all the sections of a part into one single coherent mesh (i.e. two meshes connected on the interfaces between sections from which duplicate nodes have been removed). The 3D Mesh Merging module 7 takes as input a folder containing the 3D meshes for all the sections of a part and outputs one mesh file for the entire part. Because of the previously applied 2D Mesh Modification module 5 and because of the fact that the 3D Meshing module 6 is required not to add any new nodes on the surface mesh, the nodes and elements on the interface between sections are guaranteed to match perfectly. The merging is then done by finding the pairs of duplicate nodes on the interfaces between sections, removing one of the two and renumbering accordingly.

Module 1 (CAD Disassemble) and module 8 (Mesh Assemble) each consist of one large operation, namely disassembling the initial CAD file into individual components and assembling the final mesh from individual parts, respectively. On the other hand, the other modules consist of a possibly large number of individual operations. From these, modules 2 (Mesh Parameter Setting), 3 (CAD Split), 5 (2D Mesh Modification) and 7 (3D Mesh Merging) result in as many tasks as parts to be meshed. Modules 4 (2D Meshing) and 6 (3D Meshing) allow the opportunity for a high degree of parallelism, since each part that needs to be meshed can be further split (partitioned) into a number of sections.

All tasks that need to be executed are queued in a parallel task scheduler which executes them following the chain of dependencies associated with the tasks. For example, a 2D meshing operation for all sections of one part is dependent only on the successful completion of the previous CAD split operation for that part. In other words, as soon as the CAD split operation has finished for one part, the 2D meshing of all resulting sections can begin. In the same way, if the 2D meshing of one section of a part fails, the 2D meshing of all other parts will be aborted and the process will be restarted from module 2, where new meshing parameters will be automatically set.

The system of Figure 2 follows the steps below:
1.A CAD model (assembly model) is read as input and decomposed into parts. Each solid is saved as a separate CAD file
2. Geometric characteristics and user preferences are used to decide the best initial mesh parameters to use for each part to be meshed
3. Each part is split (partitioned) into a number of sections (at CAD level)
4. All sections of all parts are meshed in 2D. For parts for which at least one section failed to mesh, the process returns to step 2, where different meshing parameters are chosen (e.g. smaller maximum element size), after which the process continues
5. For each part, the 2D meshes for the sections are modified so that the interfaces between neighboring sections match. This is needed to make merging the 3D meshes (in step 7) easy.
6.All sections of all parts are now meshed in 3D (staring with the 2D mesh). For parts for which at least one section failed to mesh, the process returns to step 2, where different meshing parameters are chosen (e.g. smaller maximum element size), after which the process continues
7. For each part, the 3D meshes of all sections are merged into one coherent mesh.
8. If all parts have been meshed, the meshes for the parts are assembled into one mesh for the complete assembly model. This mesh is the output of the system.

The parallel meshing system described above uses an off-the-shelf serial meshing program to generate 2D and 3D meshes. However, currently there are several meshing codes and meshing algorithms that can be used for this purpose. For example, the current version of the Gmsh™ mesher can use three 2D meshing algorithms (MeshAdapt, Delaunay and Frontal) and five 3D meshing algorithms (Delaunay, Frontal, Frontal Delaunay, MMG3D and R-tree). As the relation between a meshing algorithm and CAD geometry is quite a complex one, it is generally very difficult to predict which meshing algorithm is appropriate for a CAD model. Actually, there is often an inverse relation between the robustness of the mesher and the quality of the output mesh, in the sense that robust meshers produce lower quality meshes whereas less robust meshers produce higher quality meshes. Moreover, this choice has to be made for every one of the hundreds or thousands of solids representing the parts or section of parts of an assembly model.

The parallel meshing system proposed in EP12173469.3 poses two important restrictions on the meshing process:
1.The meshing resolution of all sections in a part needs to be the same
2. When creating a 3D mesh (starting from a 2D mesh), no new points can be added to the surface mesh

The reason for the two restrictions above is that they make the merging of the meshes of sections much more efficient, as they guarantee that the interfaces between neighboring sections are the same. However, not all meshing algorithms satisfy requirement 2 (from Gmsh, only the Frontal method satisfies this requirement). Moreover, it is often the case that some sections of the CAD part could be meshed at coarser resolutions than others and requirement 1 results in meshes with more than the required number of elements being generated. Finally, from a parallel programming point of view, step 5 from Figure 2 and the need to mesh all sections of a part at the same resolution generate data dependencies which reduce the scalability of the parallel solver.

According to an embodiment of a first aspect of the present invention there is provided a method of meshing, for use in a computer-aided design (CAD) or computer-aided engineering (CAE) system, a CAD domain consisting of a single CAD solid, or one of a plurality of CAD parts in an assembly type CAD model, or one of a plurality of sections of a CAD part in an assembly type CAD model, which method comprises a procedure comprising: carrying out in parallel a plurality of CAD meshing processes so as to generate one or more meshes of the said CAD domain, each CAD meshing process of the said plurality being different from the other meshing processes in the said plurality; determining which of the meshes so generated satisfies one or more preset meshing criteria which are indicative of the quality of the mesh; and selecting for use in a subsequent CAD/CAE process one of the generated meshes which satisfies the said one or more preset meshing criteria.

In a meshing method embodying the first aspect of the present invention the meshing process is more robust as a plurality of different meshing processes are used in parallel for the same task, thereby increasing the probability that one of them will succeed. Moreover, the mesh quality is increased because the most appropriate mesh is selected from multiple candidate meshes.

By executing multiple different meshing processes, for the same CAD file, in parallel, and choosing the best resulting mesh, a meshing method embodying the first aspect of the present invention can avoid the need to manually select the appropriate meshing algorithm, avoid the restriction on what meshing algorithm can be used, and avoid an increase in mesh size caused by the fact that all sections of a part need to be meshed at the same resolution.

Ideally, from a simulation point of view, it is generally preferred to use hexahedral elements instead of tetrahedral elements, since the former have much better numerical properties. Unfortunately, hexahedral meshing can be difficult to automate for complex geometries, so manual intervention is required to create the mesh. Tetrahedral meshing is easier to automate, but is in general used as a substitute for hexahedral meshing, since it is not as good numerically. In some circumstances another element type, prism element (with triangular base), may be better than tetrahedral elements but this is dependent on the application. For example, in a CFD application this would depend on the direction of the flow with respect to the mesh.

In a preferred embodiment, therefore, it is advantageous for the plurality of meshing processes to comprise at least one primary meshing process which generates mesh elements of a first type and at least one additional meshing process which generates mesh elements of a second type different from the first type, and, if the primary meshing process generates a mesh which satisfies the said one or more preset meshing criteria, and the element type of that mesh is suitable for the domain being meshed, for the mesh generated by the primary meshing process to be selected for use in the subsequent CAD/CAE process.

The said at least one primary meshing process may generate hexahedral elements.

The said at least one or another primary meshing process may generate prism elements.

The said at least one additional meshing process may generate tetrahedral elements.

In one embodiment the said plurality of meshing processes comprises a first primary meshing process which generates hexahedral elements, a second primary meshing process which generates prism elements and an additional meshing process which generates tetrahedral elements.

In a method embodying the first aspect of the present invention at least some of the meshing processes in the said plurality may utilise different meshing codes.

In a method embodying the first aspect of the present invention at least some of the meshing processes in the said plurality may utilise the same meshing codes but different meshing algorithms.

In a method embodying the first aspect of the present invention the preset meshing criterion, or one of the preset meshing criteria, may be whether the element volume, aspect ratio or skewness of each element in the generated mesh fall within predefined value ranges. When more than one of the generated meshes satisfies the said one or more preset meshing criteria, selecting the mesh for use in a subsequent CAD/CAE process may comprise selecting for use the mesh which has the lowest number of elements.

A method embodying the first aspect of the present invention may further comprise, when the CAD domain is one of a plurality of CAD parts in an assembly type CAD model, repeating the procedure for each part in the said plurality.

A method embodying the first aspect of the present invention may further comprise, when the CAD domain is one of a plurality of sections of a CAD part in an assembly type CAD model, repeating the procedure for each section of each part in the said plurality.

In such a case, where the said plurality of meshing processes comprises at least one primary meshing process which generates mesh elements of a first type and at least one additional meshing process which generates mesh elements of a second type different from the first type, after meshes have been selected for each section, the meshes of those sections which share an interface with one or more other sections which have the same mesh element type may be merged at that interface, and for any meshes of sections which share an interface with one or more other sections which have a different mesh element type, constraint conditions may be assigned to one or more selected nodes of elements on each interface between such section meshes, and those sections are processed unmerged in a CAD/CAE solver, using the constraint conditions to treat those sections as if joined at the said selected node(s) between them. Modern Structural Analysis and CFD solvers are capable of internally combining multiple meshes. Examples of open-source solvers which possess such functions are the Structural Analysis solver FrontISTR and the CFD solver Overture.

According to an embodiment of a second aspect of the present invention there is provided a method for use in a computer-aided design (CAD) or computer-aided engineering (CAE) system, after meshes have been generated for sections of a part of an assembly type CAD model but not merged, which method comprises: assigning constraint conditions to one or more selected nodes of elements on each interface between adjacent section meshes of the said part; and processing the unmerged sections in a CAD/CAE solver, using the constraint conditions to treat adjacent sections as if joined at the said selected node(s) on the interface between them.

As mentioned above, modern Structural Analysis and CFD solvers (e,g, Structural Analysis solver FrontISTR and the CFD solver Overture) are capable of internally combining multiple meshes, thus making external mesh merging unnecessary. A method embodying the second aspect of the present invention can decrease the size of the mesh and avoid a reduction in scalability due to the need to merge meshes of sections if such modern solvers, having the capability of internally combining multiple meshes, is used inside each part instead of merging the meshes of the sections.

Preferably the sections are meshed using a method embodying the first aspect of the present invention.

According to an embodiment of a third aspect of the present invention there is provided meshing apparatus for use in a computer-aided design (CAD) or computer-aided engineering (CAE) system, which apparatus is configured to mesh a CAD domain consisting of a single CAD solid, or one of a plurality of CAD parts in an assembly type CAD model, or one of a plurality of sections of a CAD part in an assembly type CAD model, by carrying out a procedure comprising: carrying out in parallel a plurality of CAD meshing processes so as to generate one or more meshes of the said CAD domain, each CAD meshing process of the said plurality being different from the other meshing processes in the said plurality; determining which of the meshes so generated satisfies one or more preset meshing criteria which are indicative of the quality of the mesh; and selecting for use in a subsequent CAD/CAE process one of the generated meshes which satisfies the said one or more preset meshing criteria.

In apparatus embodying the third aspect of the present invention the said plurality of meshing processes may comprise at least one primary meshing process which generates mesh elements of a first type and at least one additional meshing process which generates mesh elements of a second type different from the first type, and, if the primary meshing process generates a mesh which satisfies the said one or more preset meshing criteria, and the element type of that mesh is suitable for the domain being meshed, the mesh generated by the primary meshing process is selected for use in the subsequent CAD/CAE process. The said at least one primary meshing process may generate hexahedral elements. The said at least one or another primary meshing process may generate prism elements. The said at least one additional meshing process may generate tetrahedral elements.

In one embodiment of the apparatus the said plurality of meshing processes may comprise a first primary meshing process which generates hexahedral elements, a second primary meshing process which generates prism elements and an additional meshing process which generates tetrahedral elements.

In apparatus embodying the third aspect of the present invention at least some of the meshing processes in the said plurality may utilise different meshing codes.

In apparatus embodying the third aspect of the present invention at least some of the meshing processes in the said plurality may utilise the same meshing codes but different meshing algorithms.

In apparatus embodying the third aspect of the present invention the preset meshing criterion, or one of the preset meshing criteria, may be whether the element volume, aspect ratio or skewness of each element in the generated mesh fall within predefined value ranges. When more than one of the generated meshes satisfies the said one or more preset meshing criteria, selecting the mesh for use in a subsequent CAD/CAE process may comprise selecting for use the mesh which has the lowest number of elements.

Apparatus embodying the third aspect of the present invention may be operable, when the CAD domain is one of a plurality of CAD parts in an assembly type CAD model, to repeat the procedure for each part in the said plurality.

Apparatus embodying the third aspect of the present invention may be operable, when the CAD domain is one of a plurality of sections of a CAD part in an assembly type CAD model, to repeat the procedure for each section of each part in the said plurality.

In such a case, where the said plurality of meshing processes comprises at least one primary meshing process which generates mesh elements of a first type and at least one additional meshing process which generates mesh elements of a second type different from the first type, there may be provided apparatus which is operable, after meshes have been selected for each section, to merge the meshes of those sections which share an interface with one or more other sections which have the same mesh element type at that interface, and for any meshes of sections which share an interface with one or more other sections which have a different mesh element type, to assign constraint conditions to one or more selected nodes of elements on each interface between such section meshes, and to process those sections unmerged in a CAD/CAE solver, using the constraint conditions to treat those sections as if joined at the said selected node(s) between them.

According to an embodiment of a fourth aspect of the present invention there is provided apparatus for use in a computer-aided design (CAD) or computer-aided engineering (CAE) system, which apparatus comprises: constraint condition assignment means operable, after meshes have been generated for sections of a part of an assembly type CAD model but not merged, to assign constraint conditions to one or more selected nodes of elements on each interface between adjacent section meshes of the said part; and CAD/CAE solver means connected to receive the unmerged sections and to process the received unmerged sections using the constraint conditions to treat adjacent sections as if joined at the said selected node(s) on the interface between them.

Preferably the sections have been meshed using apparatus embodying the third aspect of the present invention.

According to an embodiment of a fifth aspect of the present invention there is provided a computer program which, when run on a computer, causes that computer to carry out a method embodying the first or second aspect of the present invention or to become apparatus embodying the third or fourth aspect of the present invention.

Here, different meshing processes should be understood to mean either different meshing codes or instances of the same meshing code using different meshing algorithms. For example, and without limitation, one of the meshing processes could use the SALOME-Hexahedron algorithm which produces hexahedral elements, another meshing process could use the SALOME-3D Extrusion meshing algorithm, a different meshing process could use the Netgen meshing code which produces tetrahedral elements, another meshing process could use Gmsh with MeshAdapt algorithm for the 2D meshing and Frontal algorithm for the 3D meshing (both of which produce tetrahedral elements), a further meshing process could use Gmsh with Frontal algorithm (which produces tetrahedral elements) for both 2D and 3D meshing, and yet another meshing process could use Gmsh with Delaunay for 2D meshing and MMG3D algorithm for 3D meshing (both of which produce tetrahedral elements).

Reference will now be made, by way of example, to the accompanying drawings in which:
Figure 1 (described above) is a flowchart of a CAE process;
Figure 2 (described above) is a flowchart showing a previously-considered decoupled parallel meshing system;
Figure 3 illustrates where an embodiment of the present invention can be used in a CAD system;
Figure 4 is a flowchart of a first meshing method embodying the first aspect of the present invention;
Figure 5 is a flowchart of a second meshing method embodying the first aspect of the present invention;
Figure 6 is a flowchart of a third meshing method embodying the first aspect of the present invention;
Figure 7 is a flowchart of a decoupled parallel meshing system embodying the first and second aspects of the present invention;
Figure 8 illustrates a mesh assembly operation for use in a method embodying the second aspect of the present invention;
Figure 9 is a flowchart of another decoupled parallel meshing system embodying the first aspect of the present invention; and
Figures 10 to 12 illustrates a mesh assembly operation for use in a method embodying the first and second aspects of the present invention.

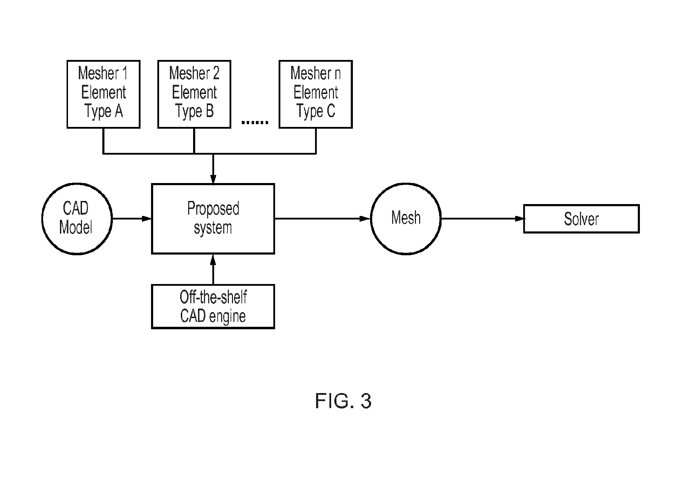

Figure 3 shows where a meshing method or meshing apparatus embodying the present invention can be utilized in a CAD system comprising an off-the-shelf CAD engine, a plurality of n meshers and a solver. In the embodiment illustrated one of the meshers, Mesher 1, generates elements of type A, another of the meshers, Mesher B, generates elements of type B, and a further one of the meshers, Mesher n, generates elements of type C, where element types A, B and C are different to one another. By way of example only, element type A may be hexahedral elements, element type B may be prism elements and element type C may be tetrahedral elements. However, although not illustrated, it is not essential for the meshers to generate elements of different types. For example, the meshers may all generate tetrahedral elements or may all generate hexahedral elements.

Embodiments of the present invention will now be described for each of the following three meshing scenarios:
1. Single CAD file, with no assembly and no CAD splitting
2. Assembly CAD file, but with no CAD splitting
3.Assembly CAD file with CAD splitting (two versions)

### Scenario 1: Single CAD file, with no assembly and no CAD splitting

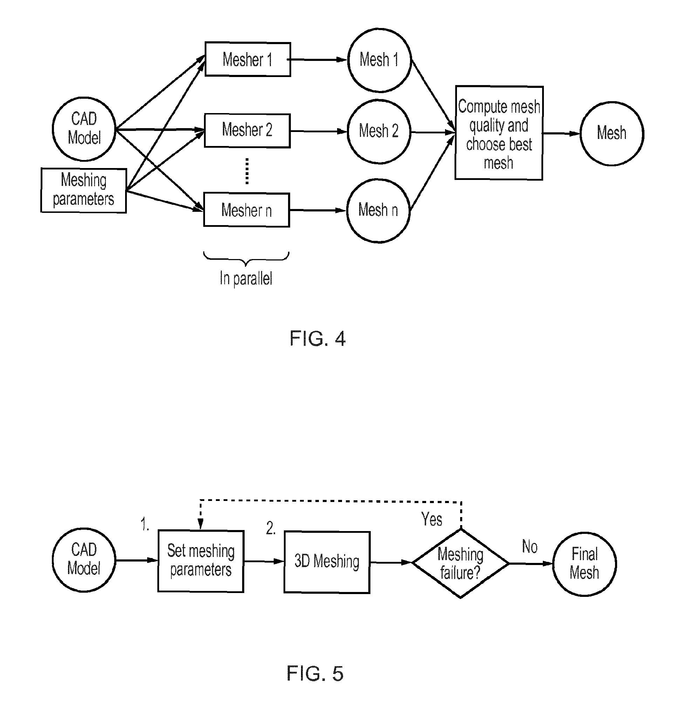

Figure 4 depicts the flow of a meshing procedure for the scenario where a 3D mesh is to be created for a CAD domain consisting of a single CAD solid (i.e. the CAD domain is not split into sections). A CAD file describing a CAD domain with a single CAD solid is given as input to a plurality of n meshers, Mesher 1, Mesher 2, ..., Mesher n, which respectively carry out a plurality of n different CAD meshing processes. As mentioned above, by different meshing processes should be understood either different meshing codes or instances of the same meshing code using different meshing algorithms. For example, and without limitation, Mesher 1 could use the Netgen meshing code, Mesher 2 could use Gmsh with MeshAdapt algorithm for the 2D meshing and Frontal algorithm for the 3D meshing, Mesher 3 could use Gmsh with Frontal algorithm for both 2D and 3D meshing, Mesher 4 could use Gmsh with Delaunay for 2D meshing and MMG3D algorithm for 3D meshing, and so on. Preferably in addition at least one of the meshers, for example Mesher n, uses a meshing process which generates mesh elements of a type which is different to that generated by at least one of the other meshers in the plurality. Hereafter such a meshing process will be referred to as a primary meshing process. The mesh generated by the primary meshing process is of a type preferred over that generated by the other meshing processes, at least in certain circumstances. In one particular example, but without limitation, Mesher n generates hexahedral mesh elements whereas the other meshers generate tetrahedral elements. In another non-limiting example at least one mesher may use a primary meshing process to generate hexahedral mesh elements, at least another mesher may generate prism elements (which in certain circumstances may be preferred over tetrahedral elements), and at least a further mesher may generate tetrahedral elements.

Together with the input CAD file, additional information is given to the meshers in the form of meshing parameters (e.g., maximum element size). In a similar way as with the meshing system described in EP12173469.3, meshing parameters could be set automatically, for example as a function of default settings, the geometrical properties of the object to be meshed and dynamical runtime information. That is, meshing parameters could be decided independently for each part to be meshed and set using information from three sources:
- The mesher configuration file. This contains meshing parameters that remain unchanged throughout the meshing process, like the type of elements to use (e.g. tetrahedral or hexahedral) and their order (e.g. 1^{st} order or 2^{nd} order)
- The part information file. This file, generated by the CAD Disassemble module, provides geometrical information on the part that is to be meshed, like the size of the bounding box or the total volume
- Runtime information. This is live information about the meshing process, for example the fact that this is the i^{th} time this part is being meshed (because previously the meshing had failed). Runtime information is used in order to recover from meshing failures, for example to restart meshing a part, which previously could not be meshed, using a different set of parameters (e.g., a smaller maximum element size).

A method embodying the first aspect of the present invention comprises carrying out in parallel a plurality of CAD meshing processes so as to generate one or more meshes of the said CAD domain, each CAD meshing process of the said plurality being different from the other meshing processes in the said plurality, determining which of the meshes so generated satisfies one or more preset meshing criteria which are indicative of the quality of the mesh, and selecting for use in a subsequent CAD/CAE process one of the generated meshes which satisfies the said one or more preset meshing criteria.

The plurality of meshing processes is executed in parallel, either on the same multicore computer or on multiple computers connected by a network, until either all the meshing processes have been completed or until a preset timeout is reached. From the set of meshes that have been successfully created, a first preset criterion of mesh quality, i.e. a mesh quality metric, is used to compare the meshes and select the mesh which most closely meets the desired mesh quality (most usually the highest quality mesh). The mesh quality metric could be any one or more of those known in the art (e.g., element volume, aspect ratio, skewness). Where more than one mesh meets the first preset criterion, selection of the mesh may be based on the number of elements in the generated mesh, that is for two or more meshes of similar quality, the mesh with the lowest number of elements is chosen. If no mesh can be successfully created, or no mesh from the successfully created meshes meets the minimum quality requirements, the meshing operation is considered to have failed.

As shown in Figure 5, initial values for each mesher are set in Step 1 and the meshing operation is performed in Step 2 as described with reference to Figure 4. If the meshing operation fails, the process returns to Step 1 where new parameters values are chosen (e.g., smaller maximum element size) and the process continues.

By generating a plurality of meshes using different meshing processes and choosing that one of the plurality of meshes which most closely meets the desired mesh quality as the output mesh, the meshing process is made more robust whilst potentially increasing the quality of the output mesh, since even if one meshing process cannot successfully create a mesh, as long as a mesh can be successfully created by a different meshing process, the meshing process ends in success. Thus, the plurality of meshers can include some less robust meshers which provide higher quality meshes, because the process can fall back on a lower quality mesh provided by a more robust mesher in the plurality if the less robust meshers fail. Moreover, a user does not need to spend time and effort choosing the best mesher for the job.

Although using n meshers to mesh the same CAD domain and using only one of the results increases the work load by n times, on modern multicore computers and clusters of such computers, such a scalable computation is comparatively cheap and is more than justified by the ability to gain a higher quality mesh, increased robustness and improved automation.

As mentioned above, preferably the plurality of meshing processes comprises at least one primary meshing process which generates mesh elements of a first type and at least one additional meshing process which generates mesh elements of a second type different from the first type. If the primary meshing process (for example one producing hexahedral or prism type elements) generates a mesh which satisfies the said one or more preset meshing criteria, and the element type of that mesh is suitable for the domain being meshed, the mesh generated by the primary meshing process is selected for use in the subsequent CAD/CAE process. That is, the mesh generated by the primary meshing process is selected above others as the mesh to be used in the subsequent CAD/CAE process even if one or more of the other meshes, which have not been generated by the primary meshing process, satisfy the meshing criteria more closely. Thus, by generating a plurality of meshes of which at least one is formed of elements which are of a different type to those of another mesh, the possibility of obtaining a mesh having elements of the different type is provided whilst retaining the robustness of the meshing method described above which uses a plurality of meshing processes generating elements all of the same type.

### Scenario 2: Assembly CAD file, but with no CAD splitting

In this scenario the task of creating a 3D mesh for an assembly type CAD model, consisting of multiple CAD solids (referred to as parts), is described. Parts are not split into sections.

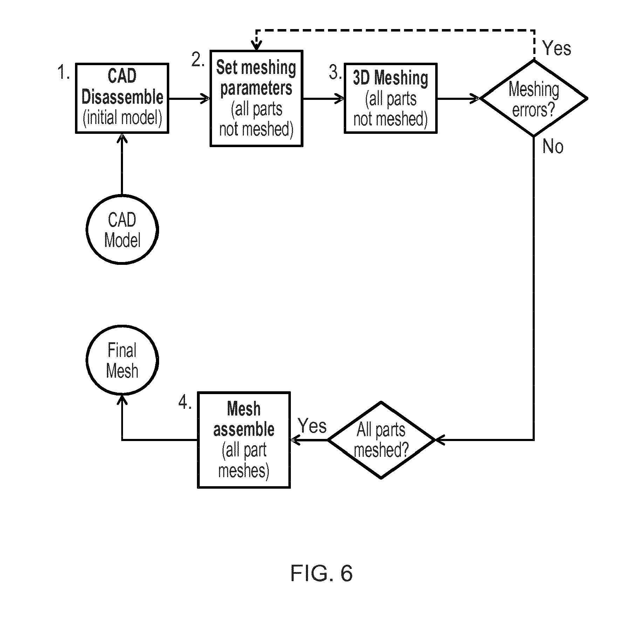

The process described for this scenario makes use of the process described in Scenario 1 and is described in Figure 6. The input CAD model of assembly type is first disassembled in Step 1. Following the disassembly process, a multitude of CAD files, equal in number to the number of parts, is generated. Each of these files contains a CAD domain consisting of a single solid. Following disassembly, the process described in Figure 5 is applied to all parts. That is, a plurality of different meshing processes are executed in parallel on each part and the best mesh (which would be that generated by a primary meshing process, if used and successful) is chosen for each part. If and when all parts have been successfully meshed, the assembly mesh is created by combining the meshes for the individual parts (in Step 4).

Increased robustness and increased mesh quality are obtained by selecting from a plurality of created meshes the best mesh for each individual part of the assembly model. Although the size and complexity of the CAD geometry in an assembly model varies greatly from part to part; with this approach it is possible automatically to use the best available mesh for each part.

### Scenario 3A: Assembly CAD file with CAD splitting version 1

In this scenario the task of creating a 3D mesh for an assembly type CAD model, consisting of multiple CAD solids, is described.

Firstly parts are split into sections, for example in a manner similar to that described in EP12173469.3. For example, this may be done using a first recursive bisection method where, if the volume of a first section exceeds the maximum permitted volume, the part is considered to be the first section and the following steps are carried out: (a) determining the principal axis of inertia A of the section; (b) determining the centre of gravity of the section; (c) defining first and second solid boxes whose intersection is one face that passes through the centre of gravity and is perpendicular to A and whose union is the entire bounding box of the section; (d) performing a CAD Boolean operation of the section and the first box, and a CAD Boolean operation of the section and the second box, to obtain respective intermediate sections; and (e) if the volume of a section obtained in step (d) exceeds the maximum permitted volume, repeating steps (b) to (d) for each of the sections obtained in step (d) until final sections whose volumes do not exceed the maximum permitted volume are obtained. An alternative recursive bisection method comprises the steps of: (a) determining (i) the number of split points Nx in an X direction, (ii) the number of split points Ny in a Y direction and (iii) the number of split points Nz in a Z direction, where the X, Y and Z directions are mutually parallel and (Nx+1)(Ny+1)(Nz+1)≥DN; (b) recursively bisecting the part in the X direction until (Nx+1) sections are obtained; (c) for all sections obtained in step (b), recursively bisecting the sections in the Y direction until (Nx+1)(Ny+1) sections are obtained; and (d) for all sections obtained in step (c), recursively bisecting the sections in the Z direction until (Nx+1)(Ny+1)(Nz+1) sections are obtained.

In a similar manner to that described with reference to Scenario 2, following splitting, the process described in Figure 4 is applied to all sections of all parts. That is, a plurality of different meshing processes are executed in parallel on each section of each part independently and the best mesh is chosen for each section.

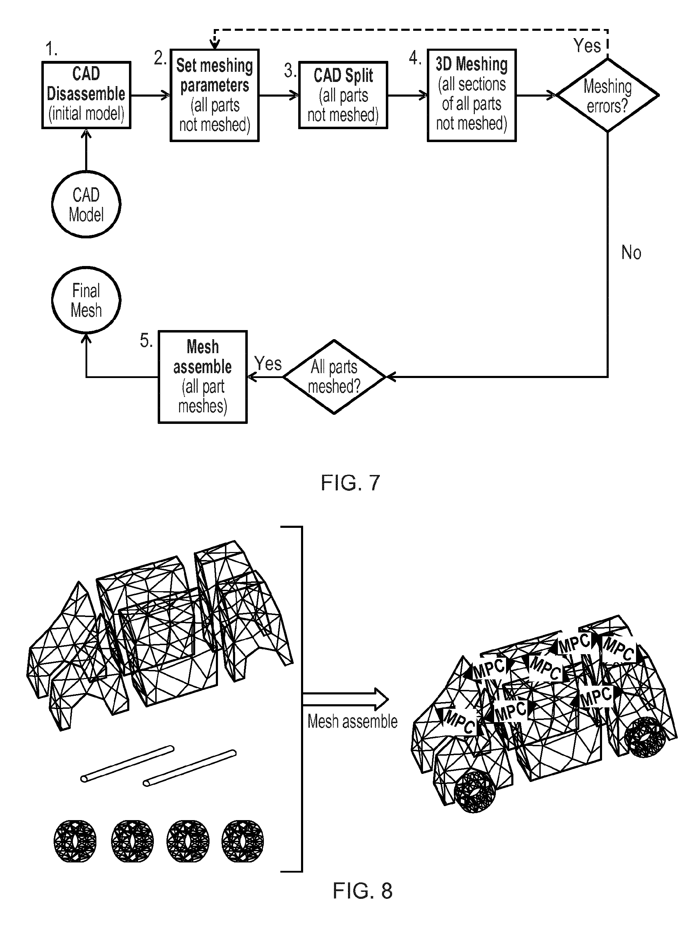

The meshing method for this scenario, which is also the most general case, is described in Figure 7. This process can be considered to be a simplified and modified version of the previously-proposed method shown in Figure 2. Unlike the method of Figure 2, in the method of Figure 7 3D meshing starting from the 2D mesh (step 6 in Figure 2) comprises the procedure described with reference to Figures 4 and 5.

In the method described with reference to Figure 2 the techniques described in EP12173469.3, which place restrictions on the meshing algorithm and meshing resolution, make the merging (knitting) of mesh sections efficient. Other methods use specialized but less efficient mesh knitting methods in order to merge the meshes of the sections into a coherent mesh of the part. Depending on the merging method, this may or may not place restrictions on the meshing algorithm and meshing resolution, but this method will in general be less efficient.

However, in the present embodiment, as will now be described, there is no need to merge section meshes because this mesh assembly is handled at the solver level (i.e. steps 4, 5 and 7 from Figure 2 are no longer needed and mesh assembly is handled differently).

Modern Structural Analysis and CFD solvers, such as FrontISTR and Overture for example, have the capability to internally treat respective meshes for multiple sections as they would parts of a single solid. This capability requires the user to specify a list of nodes of elements on the interface between adjacent section meshes. The solver then creates an internal map of nodes that must be kept "glued" together and uses special numerical techniques, such as the Multi-Point Constraint (MPC) method, to enforce this constraint.. The mesh assembly module of the present invention makes direct use of this functionality of such solvers as an efficient alternative to directly merging (knitting) the mesh sections together into a coherent part mesh.

An example of how this module would function in the case of structural analysis is given in Figure 8. Using as an example a toy car, all parts of the toy car model are combined into one assembly mesh, however the sections of the largest part (the body) are not merged into one coherent mesh. Instead of being merged, Multi-Point Constraint conditions are added at the interfaces between neighboring sections. These conditions will be interpreted by the solver, which will know to keep the sections glued to one another.

Thus use of a modern solver which has the capabilities described above, in a method embodying the present invention, allows an efficient mesh assembly to be obtained while not placing any restrictions on the mesher. In particular, firstly data dependencies introduced by the need to merge sections or parts are avoided, allowing increased parallelism. Secondly the final mesh can have fewer elements, as the requirement to mesh all sections of a part at the same resolution is removed.

### Scenario 3B: Assembly CAD file with CAD splitting version 2

In this alternative scenario a different way of creating a 3D mesh for an assembly type CAD model, consisting of multiple CAD solids, is described.

Firstly parts are split into sections, for example in a manner similar to that described in EP12173469.3.

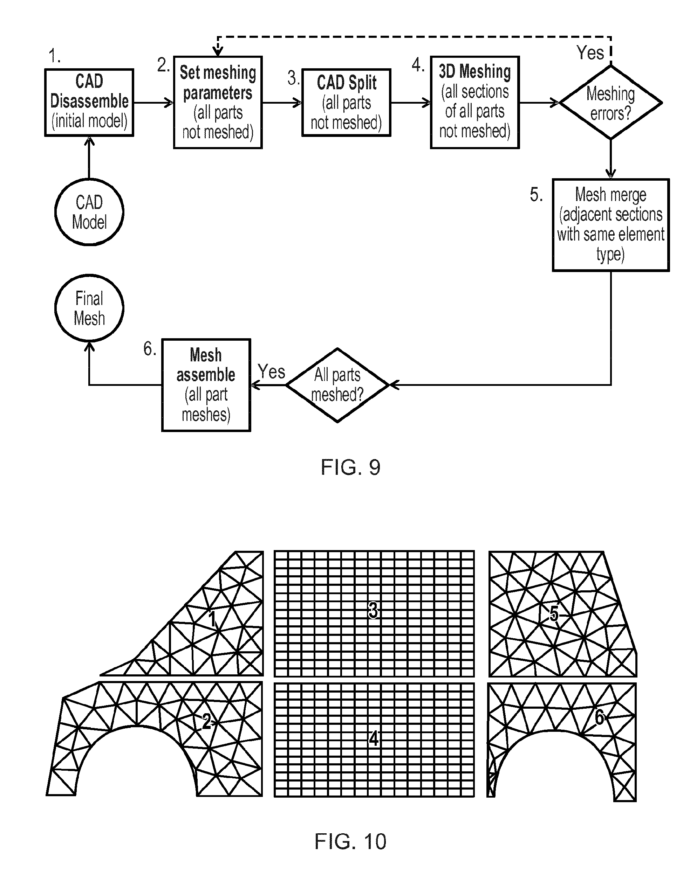

In a similar manner to that described with reference to Scenario 3A, following splitting, the process described in Figure 4 is applied to all sections of all parts. That is, a plurality of different meshing processes are executed in parallel on each section of each part independently and the best mesh is chosen for each section. In the case now described however, one of the plurality of meshing processes is a primary meshing process, that is a meshing process which generates elements of a different type to other processes in the plurality, so one or more of the meshes selected to form the part being meshed may have elements of the different type. An example of this is shown in Figure 10, where the meshes labelled 3 and 4 were successfully created using hexahedral elements for two sections, but the best tetrahedral meshes, labelled 1, 2, 5 and 6, were selected for the remaining sections.

The meshing method for this scenario is described in Figure 9, and is like that of Figure 7 except in that, after meshes have been selected for each section, the meshes of those sections which share an interface with one or more other sections which have the same mesh element type are merged at that interface, and for any meshes of sections which share an interface with one or more other sections which have a different mesh element type, constraint conditions are assigned to one or more selected nodes of elements on each interface between such section meshes, and those sections are processed unmerged in a CAD/CAE solver (such as described with reference to Scenario 3A), using the constraint conditions to treat those sections as if joined at the said selected node(s) between them.

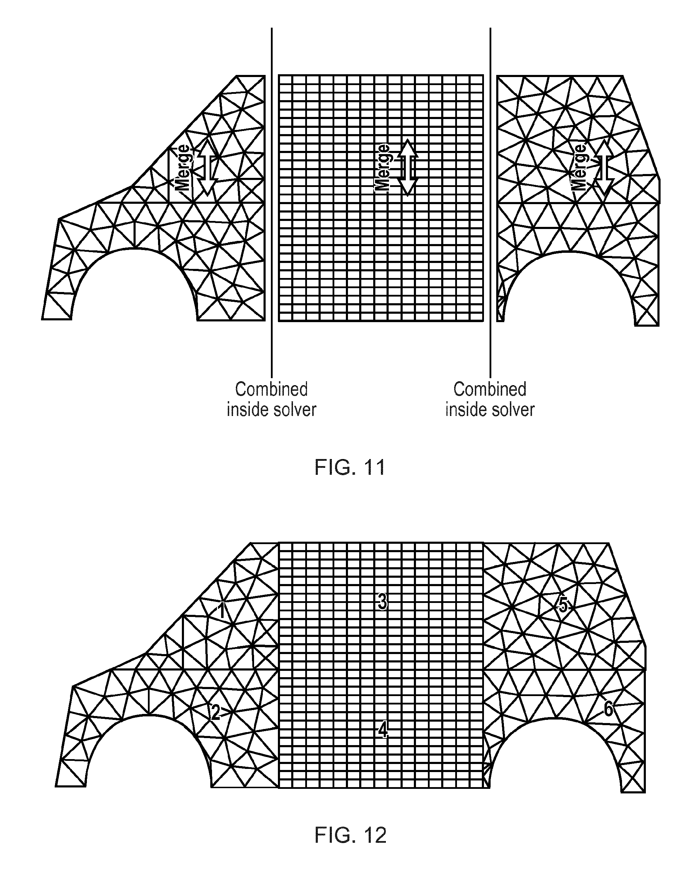

This method is illustrated in Figure 11, which shows that mesh 1 was merged with mesh 2, mesh 3 was merged with mesh 4, and mesh 5 was merged with mesh 6. As a result of the merging, three larger meshes, 1-2, 3-4 and 5-6, are created. Mesh 3-4 has a different element type to its two adjacent meshes 1-2 and 5-6, so cannot be joined to these meshes through merging. For these three meshes therefore the apparatus automatically creates information for the solver which uses methods like the multi-point (MPC) method (as described above) to treat the independent meshes as one solid. Figure 12 shows the result of this method for the example described.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

## Claims

1. A method of meshing, for use in a computer-aided design (CAD) or computer-aided engineering (CAE) system, a CAD domain consisting of a single CAD solid, or one of a plurality of CAD parts in an assembly type CAD model, or one of a plurality of sections of a CAD part in an assembly type CAD model, which method comprises a procedure comprising:
carrying out in parallel a plurality of CAD meshing processes so as to generate one or more meshes of the said CAD domain, each CAD meshing process of the said plurality being different from the other meshing processes in the said plurality;
determining which of the meshes so generated satisfies one or more preset meshing criteria which are indicative of the quality of the mesh; and
selecting for use in a subsequent CAD/CAE process one of the generated meshes which satisfies the said one or more preset meshing criteria.

2. A method as claimed in claim 1, wherein the said plurality of meshing processes comprises at least one primary meshing process which generates mesh elements of a first type and at least one additional meshing process which generates mesh elements of a second type different from the first type, and, if the primary meshing process generates a mesh which satisfies the said one or more preset meshing criteria, and the element type of that mesh is suitable for the domain being meshed, the mesh generated by the primary meshing process is selected for use in the subsequent CAD/CAE process.

3. A method as claimed in claim 2, wherein the said at least one primary meshing process generates hexahedral elements.

4. A method as claimed in claim 2, wherein the said at least one primary meshing process generates prism elements.

5. A method as claimed in claim 2, 3 or 4, wherein the said at least one additional meshing process generates tetrahedral elements.

6. A method as claimed in claim 2, wherein the said plurality of meshing processes comprises a first primary meshing process which generates hexahedral elements, a second primary meshing process which generates prism elements and an additional meshing process which generates tetrahedral elements.

7. A method as claimed in any preceding claim, wherein at least some of the meshing processes in the said plurality utilise different meshing codes.

8. A method as claimed in any preceding claim, wherein at least some of the meshing processes in the said plurality utilise the same meshing codes but different meshing algorithms.

9. A method as claimed in any preceding claim, wherein the preset meshing criterion, or one of the preset meshing criteria, is whether the element volume, aspect ratio or skewness of each element in the generated mesh fall within predefined value ranges.

10. A method as claimed in claim 9, wherein, when more than one of the generated meshes satisfies the said one or more preset meshing criteria, selecting the mesh for use in a subsequent CAD/CAE process comprises selecting for use the mesh which has the lowest number of elements.

11. A method as claimed in any preceding claim, further comprising, when the CAD domain is one of a plurality of CAD parts in an assembly type CAD model, repeating the procedure for each part in the said plurality.

12. A method as claimed in any one of claims 1 to 8, further comprising, when the CAD domain is one of a plurality of sections of a CAD part in an assembly type CAD model, repeating the procedure for each section of each part in the said plurality.

13. A method as claimed in claim 12, when read as dependent upon any one of claims 2 to 6, wherein, after meshes have been selected for each section, the meshes of those sections which share an interface with one or more other sections which have the same mesh element type are merged at that interface, and for any meshes of sections which share an interface with one or more other sections which have a different mesh element type, constraint conditions are assigned to one or more selected nodes of elements on each interface between such section meshes, and those sections are processed unmerged in a CAD/CAE solver, using the constraint conditions to treat those sections as if joined at the said selected node(s) between them.

14. A method for use in a computer-aided design (CAD) or computer-aided engineering (CAE) system, after meshes have been generated for sections of a part of an assembly type CAD model but not merged, which method comprises:
assigning constraint conditions to one or more selected nodes of elements on each interface between adjacent section meshes of the said part; and
processing the unmerged sections in a CAD/CAE solver, using the constraint conditions to treat adjacent sections as if joined at the said selected node(s) on the interface between them.

15. A method as claimed in claim 14, wherein the sections have been meshed using a method as claimed in claim 12.

16. Meshing apparatus for use in a computer-aided design (CAD) or computer-aided engineering (CAE) system, which apparatus is configured to mesh a CAD domain consisting of a single CAD solid, or one of a plurality of CAD parts in an assembly type CAD model, or one of a plurality of sections of a CAD part in an assembly type CAD model, by carrying out a procedure comprising:
carrying out in parallel a plurality of CAD meshing processes so as to generate one or more meshes of the said CAD domain, each CAD meshing process of the said plurality being different from the other meshing processes in the said plurality;
determining which of the meshes so generated satisfies one or more preset meshing criteria which are indicative of the quality of the mesh; and
selecting for use in a subsequent CAD/CAE process one of the generated meshes which satisfies the said one or more preset meshing criteria.

## Amended claims

### Amended claims in accordance with Rule 137(2) EPC.

**1.** A method of meshing, for use in a computer-aided design (CAD) or computer-aided engineering (CAE) system, a CAD domain consisting of a single CAD solid, or one of a plurality of CAD parts in an assembly type CAD model, or one of a plurality of sections of a CAD part in an assembly type CAD model, which method comprises a procedure comprising:
carrying out in parallel a plurality of CAD meshing processes in respect of the said CAD domain so as to generate one or more meshes of the said CAD domain, each CAD meshing process of the said plurality being different from the other meshing processes in the said plurality;
determining which of the meshes so generated satisfies one or more preset meshing criteria which are indicative of the quality of the mesh; and
selecting for use in a subsequent CAD/CAE process one of the generated meshes which satisfies the said one or more preset meshing criteria.

**2.** A method as claimed in claim 1, wherein the said plurality of meshing processes comprises at least one primary meshing process which generates mesh elements of a first type and at least one additional meshing process which generates mesh elements of a second type different from the first type, and, if the primary meshing process generates a mesh which satisfies the said one or more preset meshing criteria, and the element type of that mesh is suitable for the domain being meshed, the mesh generated by the primary meshing process is selected for use in the subsequent CAD/CAE process.

**3.** A method as claimed in claim 2, wherein the said at least one primary meshing process generates hexahedral elements.

**4.** A method as claimed in claim 2, wherein the said at least one primary meshing process generates prism elements.

**5.** A method as claimed in claim 2, 3 or 4, wherein the said at least one additional meshing process generates tetrahedral elements.

**6.** A method as claimed in claim 2, wherein the said plurality of meshing processes comprises a first primary meshing process which generates hexahedral elements, a conditions to treat those sections as if joined at the said selected node(s) between them.

**14.** A method for use in a computer-aided design (CAD) or computer-aided engineering (CAE) system, after meshes have been generated for sections of a part of an assembly type CAD model but not merged, which method comprises:
assigning constraint conditions to one or more selected nodes of elements on each interface between adjacent section meshes of the said part; and
processing the unmerged sections in a CAD/CAE solver, using the constraint conditions to treat adjacent sections as if joined at the said selected node(s) on the interface between them.

**15.** A method as claimed in claim 14, wherein the sections have been meshed using a method as claimed in claim 12.

**16.** Meshing apparatus for use in a computer-aided design (CAD) or computer-aided engineering (CAE) system, which apparatus is configured to mesh a CAD domain consisting of a single CAD solid, or one of a plurality of CAD parts in an assembly type CAD model, or one of a plurality of sections of a CAD part in an assembly type CAD model, by carrying out a procedure comprising:
carrying out in parallel a plurality of CAD meshing processes in respect of the said CAD domain so as to generate one or more meshes of the said CAD domain, each CAD meshing process of the said plurality being different from the other meshing processes in the said plurality;
determining which of the meshes so generated satisfies one or more preset meshing criteria which are indicative of the quality of the mesh; and
selecting for use in a subsequent CAD/CAE process one of the generated meshes which satisfies the said one or more preset meshing criteria.
